# EUROPEAN PATENT APPLICATION

(11) **EP 1 724 565 A1**
(43) Date of publication of application: **22.11.2006**
(21) Application number: 06101612.7
(22) Date of filing: 13.02.2006
(51) Int. Cl.: G01N 17/00

(54) **Non-contact temperature sensor for a weathering test drive**

(30) Priority: 16.05.2005 US 129777
(71) Applicant: Atlas Material Testing Technology, Llc., Chicago, Illinois 60613 (US)
(72) Inventor: SCOTT, KURT, IL 60615, Chicago (US); WAAS, Christopher, IL 60646 (US); ZHANG, Zhijun, IL 60607, Chicago (US); PENROSE, Bill, Oro Valley, AZ 87535 (US); BUTNER, Bill, IL 60608, Chicago (US)
(74) Representative: McCall, John Douglas

(57) **Abstract**

An accelerated weathering test apparatus of the type including a test chamber, a test specimen mount for supporting test specimens having an exposure surface oriented toward a light source, a controller for adjusting a power level to the light source, and a non-contact temperature sensor oriented to monitor, in real time, an operating temperature of the exposure surface.

## Description

The present disclosure generally relates to weathering test devices, and more particularly, to a non-contact temperature sensor for a weathering test device.

Indoor accelerated weathering test apparatus are known to test the accelerated aging characteristics of painted surfaces, fabrics, plastic sheeting and other materials. Such testing is accomplished by exposing the materials to be tested to high intensity radiation from an artificial light source that approximates sunlight, under conditions of controlled and sometimes high temperature and/or humidity inside a test chamber.

In a natural outdoor environment, heat, light and moisture combine to synergistically cause optical, mechanical and chemical changes in products which are exposed to such outdoor weathering conditions. Generally, the test apparatus of the present invention and the prior art can be used to obtain such weathering data on an accelerated time basis, to permit product manufacturers to gain information as to how their products will stand up to weathering conditions over the months or years.

Typically, an accelerated weathering test apparatus may use air which circulates through the system to control the temperature of samples being tested, so that they are not underheated or overheated by heater or radiation source which may be present, typically a high intensity plasma lamp such as a xenon lamp. It is desirable for the samples being tested to be exposed to precisely predetermined conditions, to permit more accurate comparison between various testing runs and so that the weathering conditions provided by the test apparatus can be accurately predetermined and thus recreated when desired for comparison of various samples over the years.

In known accelerated weathering test apparatus, a rotatable rack for carrying the samples to be tested surrounds a light source, often a xenon lamp, which emits irradiation having a substantial ultraviolet component. The rack is rotated typically about one revolution per minute, to avoid any systematic differences of positioning of the samples in the system. Also, the typical level of irradiation imposed on the samples is approximately one SUN, which is defined in The Society of Automotive Engineers J-1885 weathering testing method to be 0.55 watt per square meter at 340 nanometers ultraviolet radiation.

Other known accelerated weathering test apparatus further accelerate the aging of materials by exposing such materials to an irradiance level that is higher than one SUN, for example two SUNs (or about 1.1 watts per square meter in accordance with the previous definition). It has been noted that at such higher light intensities, the irregularity of light irradiance around the rack at the area of the samples becomes larger, contributing to sample temperature variations. As a result, the samples may be affected in their testing program by these variables.

Weathering test devices typically do not directly measure the temperature of each test specimen, because each test specimen cannot be fitted with temperature sensors as such a system would be very costly and time consuming to setup and operate. Weathering test devices typically include a black panel temperature sensor disposed in the test chamber that indicates the highest temperature the specimens may be experiencing. Weathering test devices also may include temperature sensors that measure the temperature of the air inside the test chamber. By measuring the temperature of the test chamber and the black panel temperature, an approximation of the temperature which the test specimens may be experiencing can be determined. However, the only method by which the actual surface temperature of a test specimen can be determined is by installing a contact temperature sensor on each specimen. As stated above, such an undertaking can be costly and add significant manpower to the preparation work for testing and the actual testing.

Therefore, there exists a need in the art for an accelerated weathering test apparatus which can provide the actual surface temperature of each test specimen to thereby control the environmental conditions of the test chamber for accurate and consistent weathering testing.

### BRIEF DESCRIPTION OF THE DRAWINGS

Certain embodiments are shown in the drawings. However, it is understood that the present disclosure is not limited to the arrangements and instrumentality shown in the attached drawings, wherein:
FIG. 1 illustrates schematic cross-sectional view of a weathering test device having a non-contact temperature sensor assembly constructed in accordance with the teachings of the present disclosure.
FIG. 2 illustrates a perspective fragmentary view of the weathering test device of FIG. 1 having a non-contact temperature sensor assembly with one non-contact temperature sensor.
FIG. 3 illustrates a perspective exploded view of a non-contact temperature sensor constructed in accordance with the teachings of the present disclosure.
FIG. 4 is a block diagram of a control system for the weathering test device of FIG. 1.
FIG. 5 is a block diagram of a controller of the control system of FIG. 4.

### DETAILED DESCRIPTION

For the purposes of promoting and understanding the principles disclosed herein, reference will now be made to the preferred embodiments illustrated in the drawings and specific language will be used to describe the same. It will nevertheless be understood that no limitation of the scope is thereby intended. Such alterations and further modifications in the illustrated device and such further applications are the principles disclosed as illustrated therein as being contemplated as would normally occur to one skilled in the art to which this disclosure relates.

In accordance with one principle aspect to the present disclosure, an accelerated weathering test apparatus of the type including a test chamber, a test specimen mount for supporting test specimens having an exposure surface oriented toward a light source, a controller for adjusting a power level to the light source, and a non-contact temperature sensor oriented to monitor, in real time, an operating temperature of the exposure surface.

In accordance with another principle aspect of the present disclosure, a method for controlling an operating temperature of test specimens in an accelerated weathering test apparatus includes the steps of: (a) orienting each of the test specimens with an exposure surface toward the light source; (b) positioning a non-contact temperature sensor in the test chamber oriented to monitor the operating temperature of the exposure surface of the test specimens; (c) generating a temperature set point and a control signal with a controller that is operatively coupled to the temperature sensor and the power source; (d) generating the power level responsive to the control signal with the power source and outputting the power level to the light source; (e) outputting a test signal from the temperature sensor representative of the operating temperature of the test specimens; (f) comparing the operating temperature to the temperature set point; (g) adjusting the control signal responsive to the comparison step (f); and (h) repeating steps (d) through (h) at pre-selected intervals for a desired period of time.

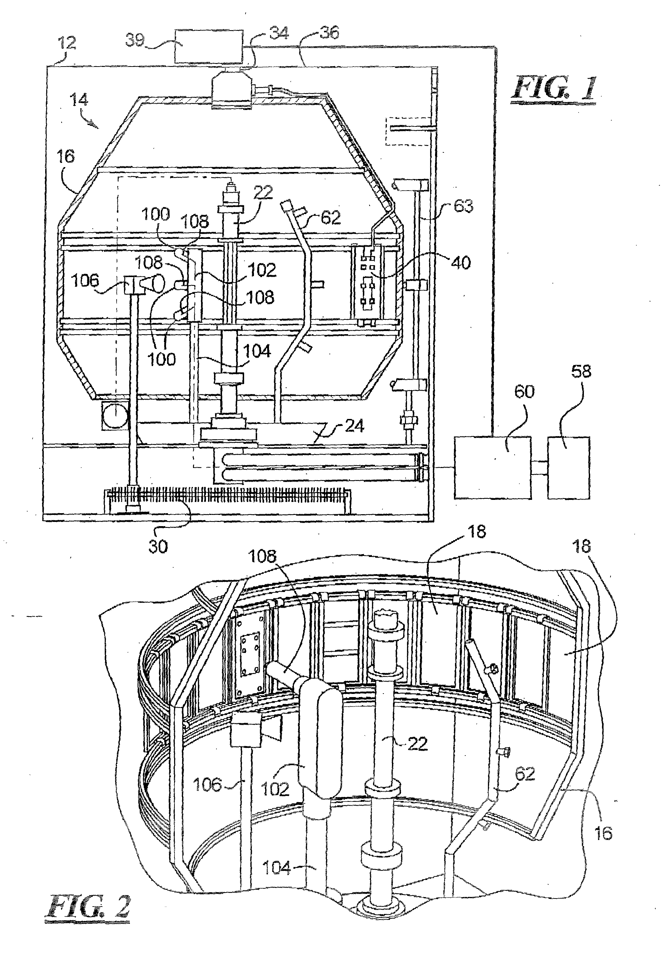

Referring to FIGS. 1 and 2, a weathering testing device 10 is shown, which comprises a housing 12 defining a test chamber 14 in which a rack 16 resides. The rack 16 includes a roughly spherical array of stainless steel struts, to which test specimens 18 (shown in FIG. 2) may be attached in a manner substantially equidistant from a central light source 22. The light source 22 may be a xenon, fluorescent, metal halide, mercury or tungsten lamp. This arrangement is similar to that disclosed in U.S. Pat. Nos. 5,503,032 and 5,854,433 each of which is fully incorporated herein by reference.

At the bottom of the test chamber 14 a circular arrangement of apertures (not shown) are provided, plus a conical baffle 24, to assist in directing air passing through the apertures along test specimens 18 carried on the rack 16. A conventional resistance-type heater element 30 may be positioned under apertures and the partition that carries them, for helping to control the temperature of the air surrounding the specimens 18. The fitting of the light source 22 may be in accordance with U.S. Pat. No. 5,226,318, which is fully incorporated herein by reference, including both electrical and water flow conduits for providing the same to the light source 22.

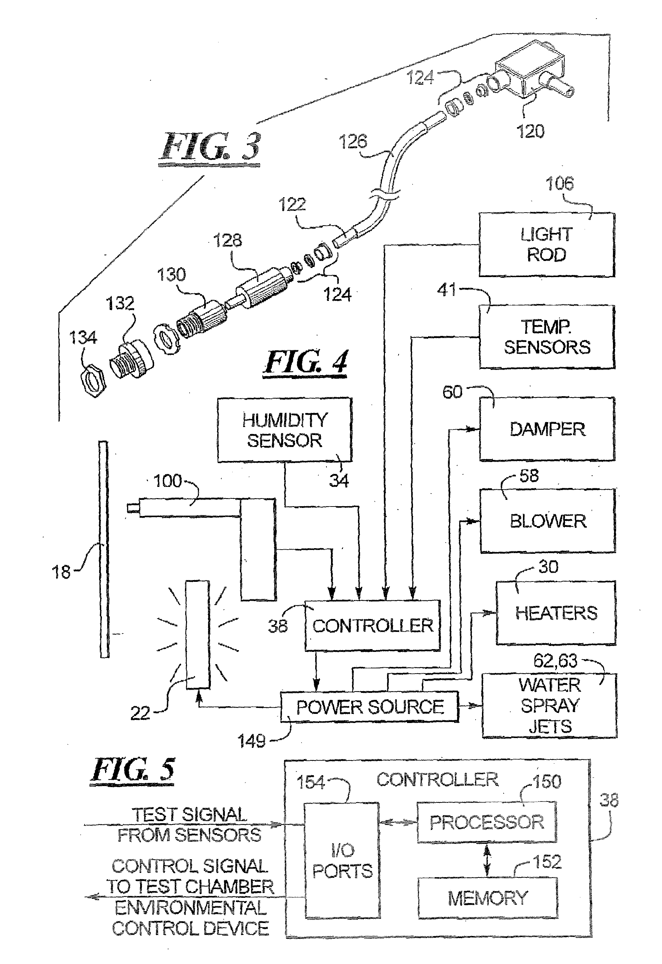

Rack 16 is carried by a shaft 34 which extends through the top wall 36 of the test chamber 14. Thus, the connections of various electronic devices carried on rack I6 may pass with shaft 34 through top wall 36 to a controller 38 (shown in FIGS. 4 and 5). The controller 38 is located near the weathering testing device 10, in a manner that is safely spaced from both the flowing water and the high electric currents and voltages used with respect to the light source 22.

A motor 39 is positioned above the top wall 36, which rotates the shaft 34 and the rack 16. The rack 16 may carry a black panel temperature sensor 40 (shown in FIG. 1), which is a sensor particularly adapted to sense the temperature directly imparted by the radiation from the light source. One or more other test chamber temperature sensors 41 (shown in FIG. 4) may be located in the test chamber 14 to generally measure the temperature of the test chamber 14. The temperature sensors 41 may be dry bulb sensors that monitor air temperature in the test chamber 14. One or more relative humidity sensors 43 (shown in FIG. 4) may also be provided. Both the temperature sensors 41 and the humidity sensors 43 provide data signals to the controller 38.

The top wall 36 also defines wall apertures (not shown), which represent the inlet of a circulatory plenum (not shown) that circulates air, driven by a blower 58, from top to the bottom of the test chamber 14 and through apertures at the bottom of the test chamber, as propelled by blower 58. The blower is controlled by the controller 38 and receives signals from the controller 38.

Within the circulator plenum is a variably openable cooling air supply vent (not shown) having a movable damper 60. The damper 60 receives control signals from the controller 38, which can change the position of the damper 60 when necessary. Rack water spray or atomizer unit 62 is also provided in the test chamber 14, along with a specimen water sprayer atomizer unit 63, provided for added specific spraying of the specimens when that is desired. Both sprayer atomizer units 62 and 63 receive control signals from the controller 38. Further details with respect to weathering test machine 10 may be as disclosed in the previously cited U.S. Pat. Nos. 5,503,032 and 5,854,433.

Referring to FIGS. 1 and 2, the weathering test device 10 of the present disclosure further includes at lease one non-contact temperature sensor 100 (shown in FIGS. 3 and 4) that is disposed in the test chamber 14. The non-contact temperature sensor 100 may be housed in a temperature sensor assembly 102 that is supported by a shaft 104, which is mounted to the floor of the test chamber 14. The temperature sensor assembly 102 could have as few as one temperature sensor 100 or as many temperature sensors 100 as desired. In the disclosed example shown in FIG. 1, the sensor assembly 102 includes three temperature sensors 100, each of which is directed to a row of test specimens 18 in the test chamber 14. In the disclose example shown in FIG. 2, the sensor assembly 102 includes one temperature sensor 100 directed to a single row of test specimens 18.

The sensor assembly 102 is fixedly mounted to the floor of the test chamber 14 and may be disposed between a light rod 106 and the light source 22. The light rod 106 measures the irradiance of the light source 22 and conveys the measurement as an input signal to the controller 38. The sensor assembly 102 includes a sensor tube 108 for each non-contact temperature sensor 100 that it includes. The sensor tube 108 generally points to a corresponding row of test specimens 18. As described above, the rack 16 rotates in the test chamber 14. Accordingly, as the rack 16 rotates, each of the test specimens 18 in each row will at some point during the rotation of the rack 16 face the corresponding sensor tube 108 of the sensor assembly 102. Accordingly, the temperature sensor 100 can detect the surface temperature of the test specimen 18.

FIG. 3 illustrates an exploded view of the components housed in the sensor tube 108 that support the sensor 100, which is also housed in the sensor tube 108. To cool the sensor 100 while operating in the test chamber 14, each temperature sensor 100 includes a gas distributor 120 which provides air to the temperature sensor 100. The air is provided to the distributor 120 from the blower 58. The distributor 120 is connected to an air hose 122 with a plurality of rings, washers, and the like, which will be referred to herein collectively with reference number 124. An insulation tube 126 surrounds the air hose 122 to insulate the air flowing through the air hose 122 from the possible extreme temperatures of the test chamber 14. The air hose 122 is connected to a sensor housing 128 by another plurality of rings, washers, and the like 124. The sensor 100 is housed in the sensor housing 128 and is generally positioned to detect the temperature of a test specimen 18 that may be in front of the sensor tube 108. A sensor head 130 covers the sensor housing 128 and an air purge 132 covers the sensor head 130 to allow for the air that is cooling the sensor housing 128 and sensor head 130 to exit the sensor tube 108. The sensor head 130 is mounted to the air purge 132 with a nut 134. Accordingly, air is provided to the distributor 120, which-in turn provides the air to the air hose 122 and the sensor housing 128 to cool the sensor housing 128 while operating in the test chamber 14.

The sensor 100 can be any type of non-contact sensor 100 that can detect temperature or relative changes in temperature without contacting an object. For example, the temperature sensor 100 can be an infrared sensor, which can detect the infrared emissions of the test specimens 18 that indicate the temperature of the surface of the test specimens 18. The sensor 100 can also be an optical pyrometer. Optical pyrometers work on the principle of using the human eye to match the brightness of the hot object to the brightness of a calibrated lamp filament inside the instrument. Typically, optical pyrometers can be used to measure objects that are hot enough to be incandescent, or glowing. Accordingly, the lowest temperature that an optical pyrometer may be able to measure is about 700 °C. The sensor 1.00 can also be a fiber optic temperature sensor, where sensing component is placed on the tip of the optical fiber's free end. The other end of the optical fiber is attached to a measuring system that collects the desired radiation, which may be primarily infrared radiation. The radiation can then be processed to result in a temperature value.

Referring to FIG. 4, the output from each non-contact temperature sensor 100 is conveyed to the controller 38 to maintain the surface temperature of each test specimen 18 at a set point temperature, The controller 38 can provide control signals to directly control the functions of the source light 22, the damper 60, the blower 58, the heaters 30, and the water spray jets 62, 63, all of which control the temperature inside the test chamber 14 and/or the temperature of the test specimens 18. The control signals from the controller 38 may be first routed to a power source 149, which in turn provides more or less power to the noted environmental control components of the test chamber 14 to control the functions thereof. However, the irradiance of the light source 22 is typically kept at a constant level and the damper 60 is controlled to maintain the temperature of the test specimens 18 at or near the set point.

In addition to receiving an output signal from the non-contact temperature sensor 100, the controller 38 may also receives signals from a humidity sensor 43, the light rod 106 and other temperature sensors 41 if they are available in the test chamber 14.

If the surface temperature of a test specimen 18 drops below the set point temperature, the controller 38 can then raise the temperature of the test chamber 14, or the test specimen 18 by controlling the above-noted components of the weathering test device 10. For example, if the surface temperature of the test specimen 18 drops below the set point temperature, the controller 38 can then close the damper 60 through the power source 149 to increase the temperature of the test chamber 14. In another example, if the surface temperature of a test specimen 18 exceeds a certain set point temperature, the controller 38 can activate the water spray jets 62, 63 to spray water on the test specimens 18 to cool the test specimens 18.

Referring to FIG. 5, the controller 38 may include a processor 150 and a memory 152 that communicate with each other to operate the controller 38. The memory 152 may be any one or a combination of volatile and non-volatile memory. The memory 152 can include one or a number of algorithms that provide the basis for the functions of the various components of the weathering test device 10, including the above-described components. For example, the algorithm can include control logic that operates any one of the damper 60, the blower 58, the heaters 30, the water spray jets 62, 63, and the light source 22 based on the temperature input from the non-contact temperature sensor 100. The controller 38 may also include an input/output port 154 that receives test signals from the various sensors as described above and conveys the signals to the processor 150. The processor 150 may then retrieve the appropriate algorithm from the memory of the controller 38 and may calculate the necessary output based on the input test signal. The processor 150 then can send the calculated output to the input/output port 154, which then conveys the control output signal to the test chamber environmental control devices, such as those described above.

One of ordinary skill in the art will appreciate that the controller 38 may be a simple control logic circuit or as complex as a functioning computer system that can store various data regarding the functions of the weathering test system 10. For example, the controller 38 can be part of a computing system that is installed adjacent to the weathering test device or installed within the weathering test device 10 that can operate the various functions of the weathering test device 10 and collect data during each testing session. For example, the controller 38 can receive the test signals from the various sensors including those described above, and record those signals into a permanent data storage device, such as a hard disk drive for later analysis. The memory 152 may include a hard disk component and function to keep a log of test data. Such data may be particularly useful when the various responses of the test specimens 18 throughout the testing period to any one of the factors that influence the characteristics of the test specimen are needed. For example, by storing the signals from the various sensors, an operator can plot the variations in the characteristics of the test specimen 18 during weathering testing to then determine how the parameters of the test should be designed or redesigned so that the weathering testing of the test specimen 18 closely simulates actual environment conditions to which the test specimen 18 may be exposed.

Furthermore, while the particular preferred embodiments have been shown and described, it will be obvious to those skilled in the art that changes and modifications may be made without departing from the teaching of the disclosure. The matter set forth in the foregoing description and accompanying drawings is offered by way of illustration only and not as limitation. The actual scope of the disclosure is intended to be defined in the following claims when viewed in their proper perspective based on the related art.

## Claims

1. A accelerated weathering test apparatus comprising:
a test chamber;
a test specimen mount for supporting a plurality of test specimens in the test chamber;
a light source disposed within the test chamber for generating irradiance in the test chamber;
each of the test specimens having an exposure surface oriented toward the light source;
a controller for generating a control signal based upon at least one input;
a power source responsive to the control signal for outputting a power level to the light source; and
a non-contact temperature sensor disposed in the test chamber and oriented to monitor an operating temperature of the exposure surface of the test specimens.

2. An apparatus as claimed in claim 1, wherein the temperature sensor detects infra red radiation emitted by the test specimens.

3. An apparatus as claimed in claim 1 or 2, wherein the temperature sensor outputs a test signal representative of the operating temperature of the test specimens and the test signal is one of the plurality of inputs.

4. An apparatus as claimed in any one of the preceding claims, wherein the controller logs a real-time test signal outputted by the temperature sensor that is representative of the operating temperature of the test specimens.

5. An apparatus as claimed in any one of the preceding claims, wherein the temperature sensor is located within an area defined by the test specimen mount.

6. An apparatus as claimed in any one of the preceding claims, wherein the temperature sensor is positioned between the light source and the test specimens.

7. An apparatus as claimed in any one of the preceding claims, wherein the temperature sensor has a longitudinal axis oriented oblique to the exposure surface of the test specimen.

8. An apparatus as claimed in any one of the preceding claims, wherein the controller generates a temperature set point, is connected to the temperature sensor and is responsive to a test signal representative of the operating temperature of the test specimens outputted by the temperature sensor for selectively controlling the power level to the light source in order to control the operating temperature of the test specimens, the power level being generally decreased when the operating temperature of the test specimens is greater than the temperature set point, and the power level being generally increased when the temperature of the test specimens is less than the temperature set point, and the power level being generally maintained constant when the temperature of the test specimens is substantially equal to the temperature set point.

9. An apparatus as claimed in any one of the preceding claims, wherein the controller includes a processing unit and memory that stores programming instructions that, when used by the processing unit, causes the controller to function to:
monitor the generated temperature set point, apply the power level to light source in proportion to the temperature set point, determine the operating temperature of the test specimens from the test signal, compare the operating temperature to the temperature set point, adjust the power level to the light source and repeat the above steps at pre-selected intervals for a desired period of time.

10. An apparatus as claimed in any one of the preceding claims, wherein the controller logs a real-time test signal outputted by the temperature sensor that is representative of the operating temperature of the each of the test specimens.

11. A method for controlling an operating temperature of test specimens in an accelerated weathering test apparatus including a test chamber, a test specimen mount for supporting the test specimens in the test chamber, a light source disposed within the test chamber for generating irradiance in the test chamber and a power source for outputting a power level to the light source, the method comprising the steps of:
(a) orienting each of the test specimens with an exposure surface toward the light source;
(b) positioning a non-contact temperature sensor in the test chamber oriented to monitor the operating temperature of the exposure surface of the test specimens;
(c) generating a temperature set point and a control signal with a controller that is operatively coupled to the temperature sensor and the power source;
(d) generating the power level responsive to the control signal with the power source and outputting the power level to the light source;
(e) outputting a test signal from the temperature sensor representative of the operating temperature of the test specimens;
(f) comparing the operating temperature to the temperature set point;
(g) adjusting the control signal responsive to the comparison step (f); and
(h) repeating steps (d) through (h) at pre-selected intervals for a desired period of time.

12. A method as claimed in claim 11, wherein the controller logs a real-time test signal outputted by the temperature sensor that is representative of the operating temperature of the each of the test specimens.

13. A method as claimed in claim 11 or 12, wherein the adjusting step (g) further includes the power level being generally decreased when the operating temperature of the test specimens is greater than the temperature set point, and the power level being generally increased when the temperature of the test specimens is less than the temperature set point, and the power level being generally maintained constant when the temperature of the test specimens is substantially equal to the temperature set point.

14. A method as claimed in claim 11, 12 or 13, wherein the temperature sensor detects infra red radiation emitted by the test specimens.

15. A method as claimed in any one of claims 11 to 14, wherein the temperature sensor is located within an area defined by the test specimen mount.

16. A method as claimed in any of claims 11 to 15, wherein the temperature sensor is positioned between the light source and the test specimens.

17. A method as claimed in any one of claims 11 to 16, wherein the temperature sensor has a longitudinal axis oriented oblique to the exposure surface of the test specimens.
